# EUROPEAN PATENT APPLICATION

(11) **EP 4 794 265 A1**
(43) Date of publication of application: **19.08.2026**
(21) Application number: 24884518.2
(22) Date of filing: 22.10.2024
(51) Int. Cl.: H04L 9/40

(54) **ATTACK DEFENSE METHOD AND APPARATUS**

(30) Priority: 31.10.2023 CN 202311444266
(71) Applicant: HUAWEI TECHNOLOGIES CO., LTD., Shenzhen 518129 (CN)
(72) Inventor: HU, Jing, Shenzhen, Guangdong 518129 (CN); ZHU, Jianbo, Shenzhen, Guangdong 518129 (CN); WANG, Zhongzhen, Shenzhen, Guangdong 518129 (CN); WANG, Jianbo, Shenzhen, Guangdong 518129 (CN); PEI, Gang, Shenzhen, Guangdong 518129 (CN)
(74) Representative: Goddar, Heinz J.
(86) International application number: PCT/CN2024/126464
(87) International publication number: WO 2025/092514

(57) **Abstract**

This application provides an attack defense method and apparatus, applied to a network device. In the method, after receiving a first control packet including a first sequence number, the network device determines, based on a first flow identifier and a status of the first control packet, whether the first control packet is a potentially legitimate packet; and then if determining that the first control packet is a potentially legitimate packet, the network device determines, based on the first flow identifier and the first sequence number, whether the potentially legitimate packet is a legitimate packet. In this way, the network device can perform "two-stage determining" on the received control packet to analyze whether the control packet is a legitimate packet. Once it is determined that the control packet is neither a potentially legitimate packet nor a legitimate packet, the network device discards the control packet, to accurately identify a stateful protocol attack packet, thereby effectively defending against stateful protocol attacks.

## Description

This application claims priority to Chinese Patent Application No. 202311444266.0, filed with the China National Intellectual Property Administration on October 31, 2023 and entitled "ATTACK DEFENSE METHOD AND APPARATUS", which is incorporated herein by reference in its entirety.

### TECHNICAL FIELD

This application relates to the field of security technologies, and in particular, to an attack defense method and apparatus.

### BACKGROUND

As networks grow in scale, stateful protocol attacks such as distributed denial-of-service (distributed denial-of-service, DDoS) attacks occur more frequent, exhibit greater variety, and strike with increasing intensity, posing great challenges to secure operating of networks. In these stateful protocol attacks, attackers usually use botnets or spoofed source addresses to flood network devices with massive quantity of packets, overwhelming their central processing units (Central Processing Unit, CPU) and causing their CPUs to crash. Therefore, protecting against stateful protocol attacks is crucial for network devices.

Currently, firewalls use a synchronization (synchronize, SYN) proxy technology to mitigate such stateful protocol attacks. To be specific, firewalls are deployed between servers and hosts, to intercept the initial SYN packet sent by the server during connection establishment. The firewall then returns a synchronization-acknowledgment (SYN-ACK) packet to the server on behalf of the host. Upon receiving the acknowledgment (ACK) packet from the server, the firewall verifies authenticity and legitimacy of the server before proceeding to perform a handshake with the host on behalf of the server. However, for the connection established between the server and the host by using the SYN proxy technology, all interactions between the server and the host need to be forwarded by the firewall. Because a transmission control protocol (Transmission Control Protocol, TCP) sequence number of the firewall is different from TCP sequence numbers of both the server and the host, the firewall needs to perform TCP sequence number conversion while forwarding data packets.

It can be learned that, this defense approach necessitates the firewall to maintain a state of connection between the firewall and the server and a state of connection between the firewall and the host, and perform TCP sequence number conversion during data packet forwarding. Such operations result in huge overheads, making this approach unsuitable for network processors (Network Processing Unit, NP) of network devices to defend against stateful protocol attacks.

### SUMMARY

Based on this, this application provides an attack defense method and apparatus. A network device determines legitimacy of a received control packet through two rounds of determining, and therefore enabling effective protection against stateful protocol attacks.

According to a first aspect, this application provides an attack defense method. The method is applied to a network device. For example, the method may include: after receiving a first control packet including a first sequence number, the network device first determines, based on a first flow identifier and a status of the first control packet, whether the first control packet is a potentially legitimate packet; and then if determining that the first control packet is a potentially legitimate packet, the network device determines, based on the first flow identifier and the first sequence number, whether the potentially legitimate first control packet is a legitimate packet. In this way, the network device can perform "two-stage determining" on the received control packet to analyze whether the control packet is a legitimate packet. An NP of the network device sends the control packet to a CPU of the network device only when the control packet is a legitimate packet. Once it is determined that the control packet is neither a potentially legitimate packet nor a legitimate packet, the network device discards the control packet, to accurately identify a stateful protocol attack packet, thereby effectively defending against stateful protocol attacks.

It may be understood that, determining, by the network device, that the first control packet is a potentially legitimate packet is preliminary determining whether the first control packet is legitimate, and may be considered as an intermediate process of determining whether the first control packet is legitimate. The network device can determine, based on the first flow identifier and the status of the first control packet, whether the first control packet belongs to a first flow indicated by the first flow identifier.

In some implementations, an example in which a basis for "two-stage determining" is carried in a form of a flow table is used. "First-time determining" in "two-stage determining", which means that the network device determines, based on the first flow identifier and the status of the first control packet, that the first control packet is a potentially legitimate packet, for example, may include: the network device obtains the first flow identifier of the first control packet and the status of the first control packet, where the first flow identifier indicates the first flow to which the first control packet belongs; and if the first flow identifier does not exist in a first flow table and the status of the first control packet is a preset state, the network device determines that the first control packet is a potentially legitimate packet. The first flow table is used to record a flow identifier of a received control packet in the preset state, and the preset state is a state corresponding to a TCP handshake packet received by the network device. "Second-time determining" in "two-stage determining", which means that the network device determines, based on the first flow identifier and the first sequence number, that the potentially legitimate packet is a legitimate packet, for example, may include: if the first flow identifier exists in the first flow table, and a correspondence between the first flow identifier and a second sequence number exists in a second flow table, and the status of the first control packet is not the preset state, the network device verifies the first sequence number based on the second sequence number, and in response to successful verification, determines that the first control packet is a legitimate packet. The TCP handshake packet may include, for example, a SYN packet, a SYN-ACK packet, or an ACK packet. In this way, the method provided in this application can be implemented by using the first flow table and the second flow table, to ensure efficient and accurate defense against a stateful protocol attack packet, and improve security of the network device.

In an example, the first flow table may be a hash table or a Bloom filter table, and the second flow table may be a hash table.

In an example, that the network device verifies the first sequence number based on the second sequence number, for example, may include: the network device first determines a sequence number range based on the second sequence number and a preset threshold; and then the network device determines whether the first sequence number falls within the sequence number range, and if yes, determines that the verification succeeds, or if no, determines that the verification fails. For example, the preset threshold may be a maximum allowable length of a preset quantity of packets. If a maximum allowable length of each packet is 1500 bits, and the preset quantity is 4, the preset threshold may be 4*1500 bits=6000 bits.

In another example, that the network device verifies the first sequence number based on the second sequence number, for example, may include: the network device first calculates a difference between the second sequence number and the first sequence number; and then the network device determines whether the difference is less than or equal to a preset length range, and if yes, determines that the verification succeeds, or if no, determines that the verification fails. The preset length range may be, for example, a preset multiple of a maximum packet length. For example, if the maximum allowable length of each packet is 1500 bits and the preset multiple is 4, the preset length range may be equal to (1500*4) bits=6000 bits.

In an example, after the network device determines that the first control packet is a legitimate packet, the method may further include: the network device updates the second flow table based on the first sequence number, where the updated second flow table includes a correspondence between the first flow identifier and the first sequence number. It should be noted that, for each legitimate packet, the network device updates a correspondence of the legitimate packet in the second flow table; or for a same flow, the network device may update a correspondence related to the flow in the second flow table once at an interval of M legitimate packets, where M needs to be less than or equal to a corresponding preset quantity in a preset threshold, or M needs to be less than or equal to a preset multiple. In this way, it can be ensured that verification, based on the sequence number in the second flow table, on whether the sequence number carried in the received control packet is legitimate is accurate.

In an example, after the network device determines that the first control packet is a legitimate packet, the method may further include: the NP of the network device sends the first control packet to the CPU of the network device; and the CPU of the network device processes the first control packet. If it is determined, by using the method provided in this application, that the first control packet is not a legitimate packet, the NP of the network device discards the first control packet instead of sending the first control packet to the CPU of the network device. This saves resources for recognizing and processing the first control packet by the CPU, avoids a breakdown caused by receiving excessive attack packets by the CPU, and improves reliability of the network device.

In an example, the method may further include: the network device receives a second control packet that belongs to the first flow; and if the first flow identifier exists in the first flow table and a status of the second control packet is the preset state, the network device may determine that the second control packet is not a legitimate packet, and discard the second control packet. In this way, based on the first flow table and the status of the received control packet, the network device can determine whether the control packet is an attack packet. For example, the network device directly determines that the second control packet already received and having the state corresponding to the TCP handshake packet is an attack packet, and does not send the second control packet to the CPU, to avoid a CPU crash caused by receiving a large quantity of attack packets that are masqueraded as TCP handshake packets.

In an example, the method may further include: the network device receives a third control packet; the network device first obtains a second flow identifier of the third control packet, where the second flow identifier indicates a second flow to which the third control packet belongs; and then if the second flow identifier does not exist in the first flow table and a status of the third control packet is the preset state, the network device records the second flow identifier in the first flow table. In this way, it is convenient for the network device to determine, based on the first flow table, whether another subsequently received control packet belonging to the second flow is a potentially legitimate packet, thereby making preparations for the network device to subsequently implement the method provided in this application on a control packet belonging to the second flow.

In an example, the method may further include: after the network device receives a fourth control packet belonging to the second flow, if it is determined that a TCP connection related to the second flow is successfully established, the network device records, in the second flow table, a correspondence between the second flow identifier and a third sequence number carried in the fourth control packet. In this way, it is convenient for the network device to determine, based on the second flow table, whether another subsequently received control packet belonging to the second flow is a legitimate packet, thereby making preparations for the network device to subsequently implement the method provided in this application on a control packet belonging to the second flow.

Successful TCP connection establishment may mean that a TCP connection related to the second flow is established between the network device and a peer device, and may specifically include: after sending a SYN packet to the peer device, the network device receives a SYN-ACK packet fed back by the peer device, and then the network device sends an ACK packet to the peer device, so that the network device and the peer device complete a TCP handshake related to the second flow; or after the peer device sends a SYN packet to the network device, the peer device receives a SYN-ACK packet fed back by the network device, and then the peer device sends an ACK packet to the network device, so that the network device and the peer device complete a TCP handshake related to the second flow. In one case, when the CPU of the network device determines that the TCP connection related to the second flow is successfully established, the CPU sends a notification message to the NP, where the notification message is used to notify the NP that the TCP connection related to the second flow is successfully established, so that the NP records the second flow identifier in the second flow table based on the notification message. In another case, when the CPU of the network device determines that the TCP connection related to the second flow is successfully established, the CPU establishes the second flow table including the second flow identifier, and sends the second flow table to the NP. In this way, the second flow table of the NP includes the second flow identifier. Afterward, if the NP of the network device receives a protocol packet that belongs to the second flow, a sequence number corresponding to the second flow identifier in the second flow table is updated based on a sequence number of the protocol packet, and legitimacy of a subsequently received protocol packet is verified based on a correspondence including the second flow identifier in the second flow table.

According to a second aspect, this application provides an attack defense apparatus, applied to a network device. The apparatus may include a receiving unit and a processing unit. The receiving unit is configured to receive a first control packet, where the first control packet includes a first sequence number; the processing unit is configured to determine, based on a first flow identifier and a status of the first control packet, that the first control packet is a potentially legitimate packet; and the processing unit is further configured to determine, based on the first flow identifier and the first sequence number, that the potentially legitimate packet is a legitimate packet.

In some implementations, the processing unit is specifically configured to: obtain the first flow identifier of the first control packet and the status of the first control packet, where the first flow identifier indicates a first flow to which the first control packet belongs; and if the first flow identifier does not exist in a first flow table and the status of the first control packet is a preset state, determine that the first control packet is a potentially legitimate packet, where the first flow table is used to record a flow identifier of a received control packet in the preset state, and the preset state is a state corresponding to a TCP handshake packet received by the network device; and
the processing unit is specifically configured to: if the first flow identifier exists in the first flow table, and a correspondence between the first flow identifier and a second sequence number exists in a second flow table, and the status of the first control packet is not the preset state, verify the first sequence number based on the second sequence number, and in response to successful verification, determine that the first control packet is a legitimate packet.

In some implementations, the processing unit is specifically configured to: determine a sequence number range based on the second sequence number and a preset threshold; and determine whether the first sequence number falls within the sequence number range, and if yes, determine that the verification succeeds, or if no, determine that the verification fails.

In some implementations, the processing unit is specifically configured to: calculate a difference between the second sequence number and the first sequence number; and determine whether the difference is less than or equal to a preset length range, and if yes, determine that the verification succeeds, or if no, determine that the verification fails.

In some implementations, the processing unit is further configured to update the second flow table based on the first sequence number, where the updated second flow table includes a correspondence between the first flow identifier and the first sequence number.

In some implementations, the receiving unit is further configured to receive a second control packet, where the second control packet belongs to the first flow; and the processing unit is further configured to: if the first flow identifier exists in the first flow table and a status of the second control packet is the preset state, determine that the second control packet is not a legitimate packet, and discard the second control packet.

In some implementations, the receiving unit is further configured to receive a third control packet; and the processing unit is further configured to: obtain a second flow identifier of the third control packet, where the second flow identifier indicates a second flow to which the third control packet belongs; and if the second flow identifier does not exist in the first flow table and a status of the third control packet is the preset state, record the second flow identifier in the first flow table.

In some implementations, the receiving unit is further configured to receive a fourth control packet, where the fourth control packet belongs to the second flow, and the fourth control packet includes a third sequence number; and the processing unit is further configured to: if it is determined that a TCP connection related to the second flow is successfully established, record a correspondence between the second flow identifier and the third sequence number in the second flow table.

In some implementations, the first flow table may be a hash table or a Bloom filter table, and the second flow table may be a hash table.

In some implementations, the TCP handshake packet includes a SYN packet, a SYN-ACK packet, or an ACK packet.

In some implementations, an NP of the apparatus sends the first control packet to a CPU of the apparatus; and the CPU of the apparatus processes the first control packet.

It should be noted that, for a specific implementation and achieved technical effect of the apparatus provided in this application, refer to the method provided in the first aspect.

According to a third aspect, this application provides a network device. The network device includes an NP and a CPU. The NP performs the method according to any one of the first aspect or the possible implementations of the first aspect. Optionally, the NP is further configured to send a first control packet that is determined to be legitimate to the CPU, and the CPU is configured to process the first control packet.

According to a fourth aspect, this application provides a network device. The network device includes a processor and a memory. The memory is configured to store instructions or program code. The processor is configured to invoke the instructions or the program code from the memory and run the instructions or the program code, to perform the method according to any one of the first aspect or the possible implementations of the first aspect.

According to a fifth aspect, this application provides a storage medium, including instructions, a program, or code. When the instructions, the program, or the code is executed on a processor, the processor is caused to perform the method according to any one of the first aspect or the possible implementations of the first aspect.

According to a sixth aspect, this application provides a program product. When the program product is run on a processor, the processor is caused to perform the method according to any one of the first aspect or the possible implementations of the first aspect.

### BRIEF DESCRIPTION OF DRAWINGS

FIG. 1 is a diagram of a possible application scenario according to an embodiment of this application;
FIG. 2A and FIG. 2B are diagrams of a possible case in the scenario in FIG. 1 according to an embodiment of this application;
FIG. 3 is a schematic flowchart of an attack defense method 100 according to an embodiment of this application;
FIG. 4 is a diagram of a first flow table according to an embodiment of this application;
FIG. 5 is a diagram of a structure of an attack defense apparatus 500 according to an embodiment of this application;
FIG. 6 is a diagram of a structure of a network device 600 according to an embodiment of this application;
FIG. 7 is a diagram of a structure of a network device 700 according to an embodiment of this application; and
FIG. 8 is a diagram of a structure of another network device 800 according to an embodiment of this application.

### DESCRIPTION OF EMBODIMENTS

For stateful protocol attacks such as DDoS attacks, if an NP of a network device cannot accurately identify and discard an attack packet, the NP of the network device considers the attack packet as a normal control packet and sends the attack packet to a CPU of the network device. Because a quantity of attack packets is usually large, and the CPU of the network device cannot process the large quantity of attack packets, the CPU of the network device is likely to break down. Therefore, it is crucial for the network device that the NP of the network device can effectively identify a stateful protocol attack packet.

Based on this, embodiments of this application provide an attack defense method. For example, the method may include: after receiving a first control packet including a first sequence number, a network device first determines, based on a first flow identifier and a status of the first control packet, that the first control packet is a potentially legitimate packet; and then determines, based on the first flow identifier and the first sequence number, that the first control packet is a legitimate packet. In this way, the network device can perform "two-stage determining" on the received control packet to analyze whether the control packet is a legitimate packet. An NP of the network device sends the control packet to a CPU of the network device only when the control packet is a legitimate packet. Once it is determined that the control packet is neither a potentially legitimate packet nor a legitimate packet, the network device discards the control packet, to accurately identify a stateful protocol attack packet, thereby effectively defending against a stateful protocol attack.

It should be noted that, compared with recording a flow identifier and a sequence number of each received control packet, and for each newly received control packet, recognizing whether the control packet is an attack packet by comparing a sequence number carried in the control packet with a recorded sequence number associated with a corresponding flow identifier, "two-stage determining" is performed in embodiments of this application. First, it is determined, based on "first-time determining", that another control packet of a flow to which the control packet belongs has been received by the network device, and that the status of the control packet meets an expectation. In this way, it is determined that the control packet is a preliminarily legitimate (that is, potentially legitimate) packet, and "second-time determining" is triggered; otherwise, if it is determined that the control packet is not a preliminarily legitimate packet, the control packet may be directly discarded without undergoing "second-time determining". In a case of "second-time determining", it is considered that the flow to which the control packet belongs is a flow with an established connection, and it is determined, based on the flow identifier of the control packet and the sequence number carried in the control packet, that the control packet is a legitimate packet. In "first-time determining", only a flow identifier of each received control packet needs to be recorded and is used to perform preliminary screening on a subsequently received control packet, and there is no need to record a sequence number. For a flow with a successfully established connection, a flow identifier and a sequence number used for "second-time determining" are recorded, and a control packet that passes preliminary screening is reconfirmed. This can save storage and computing resources of the network device to some extent, so that defense against a stateful protocol attack is more intelligent and accurate.

In embodiments of this application, the network device may be, for example, a device that includes at least an NP and a CPU, such as a switch or a router. For example, embodiments of this application may be implemented by the NP of the network device.

In embodiments of this application, the control packet may be understood as a general term for a protocol packet and a TCP handshake packet. The TCP handshake packet may include a packet exchanged by the network device in a TCP handshake phase, for example, may include a SYN packet, a SYN-ACK packet, or an ACK packet. The protocol packet may be a packet that requires control-plane processing by the CPU of the network device, for example, may be a packet related to the border gateway protocol (Border Gateway Protocol, BGP) routing protocol or a packet related to the interior gateway protocol (Interior Gateway Protocol, IGP) routing protocol. Network devices first need to exchange TCP handshake packets to establish a TCP connection, and then exchange protocol packets to complete various protocol configurations after the TCP connection is successfully established.

In embodiments of this application, the flow identifier of the control packet is used to uniquely identify the flow to which the control packet belongs. The network device may process all or some features (for example, a quintuple (that is, a source Internet protocol (Internet protocol, IP) address, a destination IP address, a source port number, a destination port number, and a transmission protocol)) of the received control packet (for example, perform a hash operation) to obtain the flow identifier of the control packet; or the control packet may also carry the flow identifier, and the network device may directly obtain the flow identifier of the control packet by parsing the received control packet.

In embodiments of this application, the status of the control packet may be indicated by a status flag bit (Flag) of the control packet. The status of the control packet may include but is not limited to SYN, SYN-ACK, and ACK. When the status of the control packet is not SYN, SYN-ACK, or ACK, it is considered that the control packet is not a TCP handshake packet but a protocol packet.

In embodiments of this application, the sequence number (sequence number) is a field carried in the packet and used to trace a byte range of packet transmission, to ensure that a loss can be detected and ensure an order of packet delivery. If packets are lost or arrive out of order at a destination, the network device may attempt to retransmit the packets or restore an original order of the packets based on sequence numbers of the packets. If a sequence number of a packet 1 transmitted by the network device is x, and a length of the packet 1 is y bits, a sequence number of a packet 2 transmitted by the network device immediately after the packet 1 may be (x+y). In embodiments of this application, determining, based on a sequence number, whether a control packet is a legitimate packet may be verifying, based on a recorded sequence number 1 corresponding to a flow to which the control packet belongs, a sequence number 2 carried in the control packet; and if the verification succeeds, considering that the control packet is a legitimate packet. The sequence number 1 may be a sequence number carried in another control packet that is received by the network device before the network device receives the control packet and that belongs to the same flow as the control packet. Verification of the sequence number 2 based on the sequence number 1 is based on the following principle: Sequence numbers of control packets belonging to the same flow and received by the network device should meet a numerical relationship. For example, a preset threshold is a sum of maximum possible lengths (for example, 1500 bits) of a preset quantity (for example, 4) of control packets, for example, 4*1500 bits=6000 bits. In this case, sequence number 1±6000 bits may be used as an appropriate sequence number range; it is determined whether the sequence number 2 falls within (sequence number 1-6000 bits, sequence number 1+6000 bits); and if the sequence number 2 falls within this range, it is considered that the verification succeeds; otherwise, it is considered that the verification fails. For another example, a difference between the sequence number 1 and the sequence number 2 is calculated, and it is determined whether the difference is less than or equal to a preset multiple (for example, four times) of a maximum possible length (for example, 1500 bits) of the control packet. If the difference is less than or equal to the preset multiple, it is considered that the verification succeeds; or otherwise, it is considered that the verification fails.

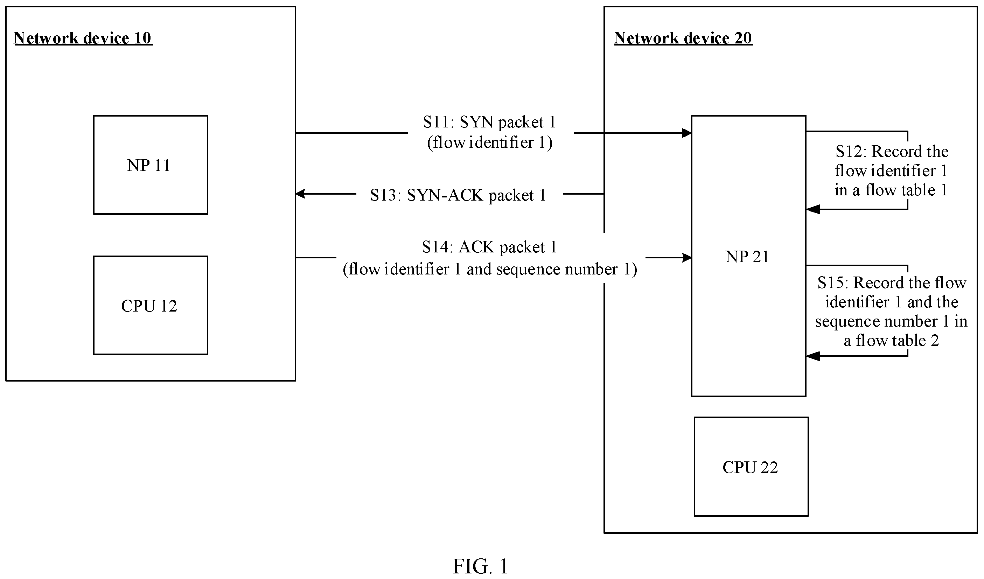

FIG. 1 is a diagram of a possible application scenario according to an embodiment of this application. With reference to FIG. 1, the scenario may include a network device 10 and a network device 20. The network device 10 may include at least an NP 11 and a CPU 12. The network device 20 may include at least an NP 21 and a CPU 22. Both the NP 11 of the network device 10 and the NP 21 of the network device 20 may implement the method provided in embodiments of this application, to defend against an attack on a received control packet. An example in which the NP 21 of the network device 20 implements the method provided in embodiments of this application is used below to describe the method provided in embodiments of this application.

For example, with reference to the scenario shown in FIG. 1, assuming that the network device 10 initiates establishment of a TCP connection to the network device 20, normal interactions between the network device 10 and the network device 20 may include the following steps: S11: The network device 10 sends a SYN packet 1 to the NP 21 of the network device 20. S12: The NP 21 determines that a flow identifier of the SYN packet 1 is a flow identifier 1, and that a flow table 1 does not include the flow identifier 1; therefore, the NP 21 records the flow identifier 1 in the flow table 1. S13: The network device 20 sends a SYN-ACK packet 1 to the network device 10. S14: The network device 10 sends an ACK packet 1 to the NP 21 of the network device 20. S15: The NP 21 sends the ACK packet 1 to the CPU 22, and the CPU 22 determines that a TCP connection related to a flow 1 indicated by the flow identifier 1 is successfully established between the network device 10 and the network device 20. In one case, the CPU 22 sends a notification message to the NP 21, where the notification message is used to notify the NP 21 that the TCP connection related to the flow 1 is successfully established, so that the NP 21 records the flow identifier 1 in a flow table 2 based on the notification message. In another case, the CPU 22 establishes a flow table 2 including the flow identifier 1, and sends the flow table 2 to the NP 21. In this way, the flow table 2 of the NP 21 includes the flow identifier 1. Afterward, if a protocol packet that belongs to the flow 1 is received, a sequence number corresponding to the flow identifier 1 in the flow table 2 is updated based on a sequence number of the protocol packet, and legitimacy of a subsequently received protocol packet is verified based on a correspondence including a flow identifier 2 in the flow table 2.

In an example, after S15, for a control packet 1 that is transmitted from the network device 10 to the NP 21 of the network device 20 and belongs to the flow 1 indicated by the flow identifier 1, an attack defense procedure of the NP 21 may include the following steps: S16: The NP 21 determines that a flow identifier of the control packet 1 is the flow identifier 1, and the control packet 1 carries a sequence number 2, and a status of the control packet 1 is a state 1. S17: The NP 21 determines that both the flow table 1 and the flow table 2 include the flow identifier 1, and if the state 1 is SYN, SYN-ACK, or ACK, determines that the control packet 1 is an attack packet, so that the NP 21 discards the control packet 1 instead of sending the control packet 1 to the CPU 22, or if the state 1 is not SYN, SYN-ACK, or ACK, determines that the control packet 1 is a potentially legitimate packet, and therefore performs S18. S18: The NP 21 verifies the sequence number 2 based on a sequence number 1 and a correspondence between the flow identifier 1 and the sequence number 1 included in the flow table 2, and if the verification succeeds, determines that the control packet 1 is a legitimate packet, and therefore sends the control packet 1 to the CPU 22, or if the verification fails, determines that the control packet 1 is not a legitimate packet but an attack packet, so that the NP 21 discards the control packet 1 instead of sending the control packet 1 to the CPU 22.

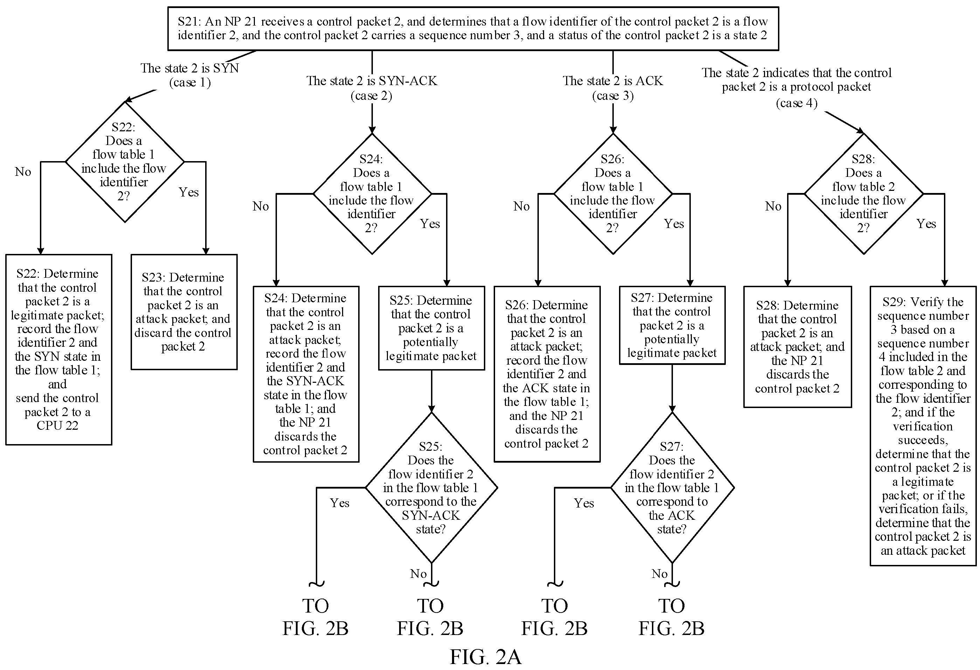

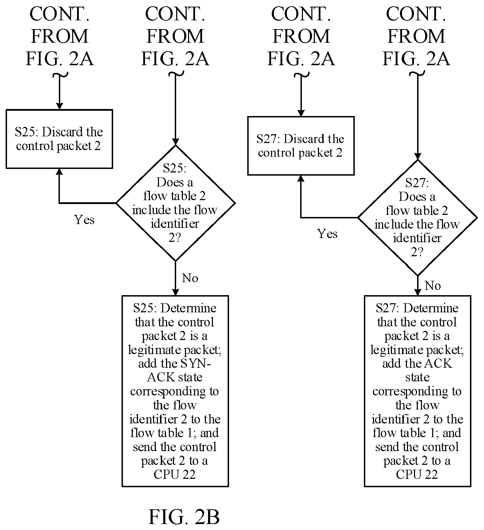

In another example, with reference to FIG. 2A and FIG. 2B, after S15, for a control packet 2 that is transmitted from the network device 10 to the NP 21 of the network device 20 and belongs to a flow 2 indicated by the flow identifier 2, an attack defense procedure of the NP 21 may include the following step: S21: The NP 21 determines that a flow identifier of the control packet 2 is the flow identifier 2, and the control packet 2 carries a sequence number 3, and a status of the control packet 2 is a state 2. For various attack defense procedures based on different cases of the state 2, refer to the following S22 to S29. For a case 1 in which the state 2 is SYN, refer to the following S22 and S23. S22: If it is determined that the flow table 1 does not include the flow identifier 2, the NP 21 determines that the control packet 2 is a potentially legitimate packet, records the flow identifier 2 and the SYN state in the flow table 1, and sends the control packet 2 to the CPU 22. S23: If it is determined that the flow table 1 includes the flow identifier 2, the NP 21 determines that the control packet 2 is an attack packet, and the NP 21 discards the control packet 2 instead of sending the control packet 2 to the CPU 22. For a case 2 in which the state 2 is SYN-ACK, refer to the following S24 and S25. S24: If it is determined that the flow table 1 does not include the flow identifier 2, the NP 21 determines that the control packet 2 is not a potentially legitimate packet but an attack packet. Therefore, the NP 21 discards the control packet 2 instead of sending the control packet 2 to the CPU 22, and the NP 21 records the flow identifier 2 and the SYN-ACK state in the flow table 1. S25: If it is determined that the flow table 1 includes the flow identifier 2, the NP 21 determines that the control packet 2 is a potentially legitimate packet, and therefore determines whether the flow identifier 2 in the flow table 1 corresponds to the SYN-ACK state, and if yes, discards the control packet 2, or if no, continues to determine whether the flow table 2 includes the flow identifier 2, and if the flow table 2 includes the flow identifier 2, it indicates that a TCP connection related to the flow 2 has been successfully established, and therefore the NP 21 discards the control packet 2 instead of sending the control packet 2 to the CPU 22, or if the flow table 2 does not include the flow identifier 2, the NP 21 determines that the control packet 2 is a legitimate packet, adds the SYN-ACK state corresponding to the flow identifier 2 to the flow table 2, and sends the control packet 2 to the CPU 22. For a case 3 in which the state 2 is ACK, refer to the following S26 and S27. S26: If it is determined that the flow table 1 does not include the flow identifier 2, the NP 21 determines that the control packet 2 is not a potentially legitimate packet but an attack packet. Therefore, the NP 21 discards the control packet 2 instead of sending the control packet 2 to the CPU 22, and the NP 21 records the flow identifier 2 and the ACK state in the flow table 1. S27: If it is determined that the flow table 1 includes the flow identifier 2, the NP 21 determines that the control packet 2 is a potentially legitimate packet, and therefore determines whether the flow identifier 2 in the flow table 1 corresponds to the ACK state, and if yes, discards the control packet 2, or if no, continues to determine whether the flow table 2 includes the flow identifier 2, and if the flow table 2 includes the flow identifier 2, it indicates that a TCP connection related to the flow 2 has been successfully established, and therefore the NP 21 discards the control packet 2 instead of sending the control packet 2 to the CPU 22, or if the flow table 2 does not include the flow identifier 2, the NP 21 determines that the control packet 2 is a legitimate packet, adds the ACK state corresponding to the flow identifier 2 to the flow table 2, and sends the control packet 2 to the CPU 22. For a case 4 in which the state 2 indicates that the control packet 2 is a protocol packet (that is, the state 2 is not SYN, SYN-ACK, or ACK), refer to the following S28 and S29. S28: If it is determined that the flow table 2 does not include the flow identifier 2, the NP 21 determines that the control packet 2 is not a legitimate packet but an attack packet. Therefore, the NP 21 discards the control packet 2 instead of sending the control packet 2 to the CPU 22. S29: If it is determined that the flow table 2 includes the flow identifier 2, the NP 21 verifies the sequence number 3 based on a sequence number 4 included in the flow table 2 and corresponding to the flow identifier 2. If the verification succeeds, the NP 21 determines that the control packet 2 is a legitimate packet, and therefore sends the control packet 2 to the CPU 22. If the verification fails, the NP 21 determines that the control packet 2 is not a legitimate packet but an attack packet, and therefore discards the control packet 2 instead of sending the control packet 2 to the CPU 22. Optionally, in S29, when it is determined that the control packet 2 is a legitimate packet, the sequence number 4 included in the flow table 2 and corresponding to the flow identifier 2 may be further updated to the sequence number 3 carried in the control packet 2, so that more accurate defense against a subsequent protocol attack packet is implemented.

It should be noted that, in the embodiment shown in FIG. 2A and FIG. 2B, the flow table 1 records a status of a TCP handshake packet newly received in each flow in the TCP handshake phase, so that an attack defense procedure is more secure, and that attackers are prevented from creating TCP handshake packets in various states as attack packets.

It should be noted that the foregoing description is provided by using an example in which "two-stage determining" in the method provided in embodiments of this application is based on the flow table 1 and the flow table 2. The flow table 1 may include flow identifiers of all control packets received by the network device 20. Optionally, the flow table 1 may further include a status of a newly received TCP handshake packet. The flow table 2 may include a correspondence between a flow identifier and a sequence number of a control packet in a flow whose TCP connection is already established (that is, a TCP connection is successfully established). The flow table 1 may be a hash table or a Bloom filter table maintained on the network device 20, and the flow table 2 may be a hash table maintained on the network device 20.

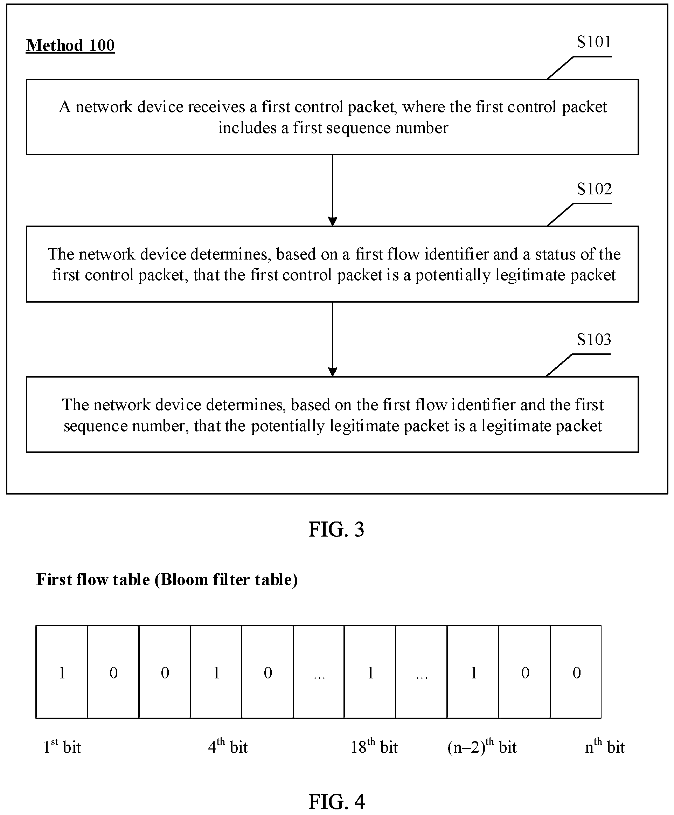

To describe embodiments of this application more clearly, the following describes an attack defense method provided in an embodiment of this application with reference to FIG. 3.

FIG. 3 is a schematic flowchart of an attack defense method 100 according to an embodiment of this application. In the description of this embodiment of this application, it is assumed that the method 100 is performed by a network device. For example, the network device may be the network device 10 or the network device 20 in the scenario shown in FIG. 1. For example, it may be understood that the method 100 is implemented by an NP of the network device. Corresponding to the example shown in FIG. 2A and FIG. 2B, it may be understood that the method 100 is implemented by the NP 21 of the network device 20.

As shown in FIG. 3, for example, the method 100 may include the following S101 to S103.

S101: The network device receives a first control packet, where the first control packet includes a first sequence number.

The first control packet may be a TCP handshake packet or a protocol packet.

The first control packet may include at least the first sequence number. Optionally, the first control packet may further include information used to determine a first flow identifier and/or information used to determine a status of the first control packet. The information used to determine the first flow identifier may be information that is in the first control packet and that can indicate a feature of a first flow to which the first control packet belongs, for example, may be all or a part of a quintuple (that is, a source IP address, a destination IP address, a source port number, a destination port number, and a transmission protocol) of the first control packet; or the information used to determine the first flow identifier may be the first flow identifier itself. The information used to determine the status of the first control packet may be a value of a status flag field in the first control packet, and the value of the status flag field in the first control packet indicates the status of the first control packet. The status of the first control packet may include but is not limited to SYN, SYN-ACK, and ACK. When the status of the first control packet is not SYN, SYN-ACK, or ACK, it is considered that the first control packet is not a TCP handshake packet but a protocol packet.

In an example, after the network device receives the first control packet, the NP of the network device needs to first identify, based on the method 100, whether the first control packet is a legitimate packet. When it is determined that the first control packet is a legitimate packet, the NP of the network device may send the first control packet to a CPU of the network device, so that the CPU processes the first control packet. When it is determined that the first control packet is not a legitimate packet, it may be determined that the first control packet is an attack packet, and the NP of the network device may directly discard the first control packet without sending the first control packet to the CPU of the network device. In this way, the NP of the network device can effectively identify and process an attack packet according to the method 100, to avoid a CPU breakdown caused by sending a large quantity of attack packets to the CPU as legitimate packets, and implement accurate defense against a stateful protocol attack.

S102: The network device determines, based on the first flow identifier and the status of the first control packet, that the first control packet is a potentially legitimate packet.

It may be understood that determining whether the first control packet is a potentially legitimate packet in S102 is "first-time determining" in "two-stage determining" of the method 100. "Second-time determining" continues to be performed only if it is determined in S102 that the first control packet is a potentially legitimate packet, that is, S103 continues to be performed to determine whether the first control packet is a legitimate packet. If it is determined in S102 that the first control packet is not a potentially legitimate packet, S103 is not performed, but the first control packet is directly discarded.

The potentially legitimate packet may be understood as a packet that is preliminarily determined to be legitimate through "first-time determining" in "two-stage determining", and is a prerequisite for performing "second-time determining" in S103. Determining that the first control packet is a potentially legitimate packet in S102 may also be understood as determining that the first control packet belongs to the first flow indicated by the first flow identifier.

In some possible implementations, a basis for "first-time determining" may be carried in a form of a flow table. The following uses a first flow table as an example for description. Before S102, the method 100 may further include: when the first flow table maintained on the network device does not include the first flow identifier, the NP of the network device receives a control packet 1, and if a status of the control packet 1 is SYN, SYN-ACK, or ACK, determines that the control packet 1 is a potentially legitimate packet, records the first flow identifier in the first flow table, and sends the control packet 1 to the CPU of the network device, so that the CPU processes the control packet 1. The first flow identifier indicates the first flow, and both the control packet 1 and the first control packet in S102 belong to the first flow.

In an example, when the first flow table does not include the first flow identifier, for example, S102 may include: S1021: Obtain the first flow identifier of the first control packet and the status of the first control packet. S1022: If the first flow identifier does not exist in the first flow table, and the status of the first control packet is a preset state, determine that the first control packet is a potentially legitimate packet. The first flow table is used to record a flow identifier of a received control packet in the preset state. The preset state is a state corresponding to a TCP handshake packet received by the network device. The TCP handshake packet may be a SYN packet, a SYN-ACK packet, or an ACK packet. For example, when the network device initiates establishment of a TCP connection, after the network device sends a SYN packet to a peer end of the TCP connection, the network device receives a SYN-ACK packet from the peer end, and the preset state may include SYN-ACK; or when the peer end initiates establishment of a TCP connection to the network device, the network device receives a SYN packet from the peer end, and the preset state may include SYN.

In another example, the method 100 may further include: the network device receives a second control packet that belongs to the first flow; and if the first flow identifier exists in the first flow table and a status of the second control packet is the preset state, the network device determines that the second control packet is not a legitimate packet, and discards the second control packet. A reason is as follows: When the first flow identifier already exists in the first flow table, it indicates that the network device has received a TCP handshake packet that belongs to the first flow. If the network device receives again a TCP handshake packet that belongs to the first flow in this case, the network device considers that the TCP handshake packet belonging to the first flow and received again is an attack packet rather than a legitimate packet, and therefore discards the packet.

To save storage resources, the first flow table may be a hash table or a Bloom filter table.

If the first flow table is a hash table, the flow identifier stored in the first flow table may be a hash value obtained by performing hash calculation on the flow identifier obtained from the control packet. The flow identifier obtained from the control packet may be a flow identifier that is directly obtained by the network device by parsing the control packet when the control packet includes the flow identifier in a case 1, or a flow identifier obtained by performing calculation on a target feature that is obtained by the network device from features of the control packet and that is used to calculate the flow identifier when the control packet does not include the flow identifier in a case 2. In this case, a process of obtaining the first flow identifier of the first control packet in S1021 may correspond to a process of storing the flow identifier in the first flow table.

When the first flow table is a Bloom filter table, compared with a hash table, storage resources can be further saved. If the first flow table is a Bloom filter table, the flow identifier stored in the first flow table may be as follows: The flow identifier obtained from the control packet undergoes hash calculation for a plurality of times to obtain a plurality of hash values, the plurality of hash values are mapped to corresponding bits, and values of the corresponding bits are set to 1. For example, the Bloom filter table includes n bits (n is an integer greater than 0), and hash calculation is performed for four times on the flow identifier obtained from the control packet, to obtain four hash values {1, 4, 18, n-2} respectively. After the flow identifier of the control packet is recorded in the first flow table, a 1^{st} bit, a 4^{th} bit, an 18^{th} bit, and an (n-2)^{th} bit in the first flow table are 1, as shown in FIG. 4. After hash calculation is performed for four times, it can be ensured that bits corresponding to different flow identifiers in the Bloom filter table are not completely identical as much as possible, so that the Bloom filter table can accurately store a large quantity of flow identifiers. In this case, a process of obtaining the first flow identifier of the first control packet in S1021 may correspond to a process of storing the flow identifier in the first flow table.

Determining that the first control packet is a potentially legitimate packet in S102 is preliminary screening performed for performing a next step of determining (that is, performing S103), so that computing resources in this embodiment of this application can be effectively saved.

S103: The network device determines, based on the first flow identifier and the first sequence number, that the potentially legitimate packet is a legitimate packet.

In some possible implementations, a basis for "second-time determining" may also be carried in a form of a flow table. The following uses a second flow table as an example for description. Before S103, the method 100 may further include: the CPU of the network device determines that a TCP connection related to the first flow is successfully established. In one case, the CPU sends a notification message to the NP, where the notification message is used to notify the NP that the TCP connection related to the first flow is successfully established, so that the NP records the first flow identifier in the second flow table based on the notification message. In another case, the CPU establishes the second flow table including the first flow identifier, and sends the second flow table to the NP. In this way, the second flow table maintained by the NP includes the first flow identifier. Afterward, if the NP of the network device receives a protocol packet 1 that belongs to the first flow, the NP updates a correspondence of the first flow identifier in the second flow table based on a sequence number 1 of the protocol packet 1, and the updated second flow table includes a correspondence between the first flow identifier and the sequence number 1. Then, if the NP of the network device receives a protocol packet 2 that belongs to the first flow, the NP verifies, based on the sequence number 1 that is in the second flow table and that corresponds to the first flow identifier, a sequence number 2 carried in the protocol packet 2. If the verification succeeds, the NP determines that the protocol packet 2 is a legitimate packet.

In an example, if the second flow table includes a correspondence between the first flow identifier and a second sequence number, and the first control packet is not in the preset state, for example, S103 may include: the network device verifies the first sequence number based on the second sequence number, and determines, in response to successful verification, that the first control packet is a legitimate packet. A principle for verifying the first sequence number based on the second sequence number is as follows: The second sequence number is a sequence number of a control packet that has been determined to be legitimate, and control packets exchanged between two devices follow a rule according to a time sequence. Generally, a sequence number of a subsequent control packet is a sum of a sequence number of a previous control packet and a packet length of the subsequent control packet. Therefore, a sequence number of a control packet transmitted after a previous legitimate packet should meet a numerical range. If the sequence number does not meet the numerical range, it may be directly determined that the control packet is an attack packet forged by attackers, instead of a legitimate packet.

For example, that the network device verifies the first sequence number based on the second sequence number may include: the network device first determines a sequence number range based on the second sequence number and a preset threshold; and then the network device determines whether the first sequence number falls within the sequence number range, and if yes, determines that the verification succeeds, or if no, determines that the verification fails. For example, the preset threshold may be a maximum allowable length of a preset quantity of packets. If a maximum allowable length of each packet is 1500 bits, and the preset quantity is 4, the preset threshold may be 4*1500 bits=6000 bits. Assuming that the second sequence number is a, and that the first sequence number is b, the sequence number range may be (a-6000, a+6000). If b∈(a-6000, a+6000), it is determined that the verification succeeds; or otherwise, it is determined that the verification fails.

For another example, that the network device verifies the first sequence number based on the second sequence number may include: the network device first calculates a difference between the second sequence number and the first sequence number; and then the network device determines whether the difference is less than or equal to a preset length range, and if yes, determines that the verification succeeds, or if no, determines that the verification fails. The preset length range may be, for example, a preset multiple of a maximum packet length. Assuming that the maximum allowable length of each packet is 1500 bits and that the preset multiple is 4, the preset length range may be equal to (1500*4) bits=6000 bits. Assuming that the second sequence number is a and that the first sequence number is b, |a-b| is calculated, and whether |a-b| is less than or equal to 6000 bits is determined. If yes, it is determined that the verification succeeds; otherwise, it is determined that the verification fails.

In some implementations, if it is determined in S103 that the first control packet is a legitimate packet, the NP of the network device may send the first control packet to the CPU of the network device, so that the CPU processes the first control packet. If it is determined in S103 that the first control packet is not a legitimate packet, the NP of the network device discards the first control packet instead of sending the first control packet to the CPU of the network device. This saves resources for recognizing and processing the first control packet by the CPU, avoids a breakdown caused by receiving excessive attack packets by the CPU, and improves reliability of the network device.

In some implementations, if it is determined in S103 that the first control packet is a legitimate packet, the method 100 may further include: the network device updates the second flow table based on the first sequence number, where the updated second flow table includes a correspondence between the first flow identifier and the first sequence number. In this way, it can be ensured that verification, based on the sequence number in the second flow table, on whether the sequence number carried in the received control packet is legitimate is accurate. It should be noted that, for each legitimate packet, the network device updates a correspondence of the legitimate packet in the second flow table; or for a same flow, the network device may update a correspondence related to the flow in the second flow table once at an interval of M legitimate packets, where M needs to be less than or equal to a corresponding preset quantity in a preset threshold, or M needs to be less than or equal to a preset multiple.

To save storage resources, the second flow table may be a hash table.

If the second flow table is a hash table, in a correspondence between a flow identifier and a sequence number that is stored in the second flow table, only the flow identifier may be a hash value, and the sequence number may be a sequence number carried in a control packet.

In some other possible implementations, for other flows, an attack defense solution is similar to that for the first flow. Using a second flow as an example, the method 100 may further include: the network device receives a third control packet; the network device obtains a second flow identifier of the third control packet, where the second flow identifier indicates the second flow to which the third control packet belongs; and if the second flow identifier does not exist in the first flow table and a status of the third control packet is the preset state, the network device records the second flow identifier in the first flow table. In addition, the NP of the network device further sends the third control packet to the CPU of the network device. The preset state is SYN, SYN-ACK, or ACK.

In an example, the method 100 may further include: the network device receives a fourth control packet that belongs to the second flow, where the fourth control packet includes a third sequence number; and if it is determined that a TCP connection related to the second flow is successfully established, the network device records a correspondence between the second flow identifier and the third sequence number in the second flow table. In addition, the NP of the network device further sends the fourth control packet to the CPU of the network device.

In another example, the method 100 may further include: the network device receives a fifth control packet that belongs to the second flow, where the fifth control packet includes a fourth sequence number; and if a status of the fifth control packet is not the preset state, and the second flow table includes a correspondence between the second flow identifier and the third sequence number, the network device verifies the fourth sequence number based on the third sequence number, and if the verification succeeds, determines that the fifth control packet is a legitimate packet; and the NP of the network device further sends the fifth control packet to the CPU of the network device. If the verification fails, it is determined that the fifth control packet is not a legitimate packet, and the NP of the network device discards the fifth control packet.

It can be learned that, according to the method 100, after receiving the first control packet including the first sequence number, the network device first determines, based on the first flow identifier and the status of the first control packet, that the first control packet is a potentially legitimate packet; and then determines, based on the first flow identifier and the first sequence number, that the potentially legitimate first control packet is a legitimate packet. In this way, the network device can perform "two-stage determining" on the received control packet to analyze whether the control packet is a legitimate packet. The NP of the network device sends the control packet to the CPU of the network device only when the control packet is a legitimate packet. Once it is determined that the control packet is neither a potentially legitimate packet nor a legitimate packet, the network device discards the control packet, to accurately identify a stateful protocol attack packet, thereby effectively defending against a stateful protocol attack.

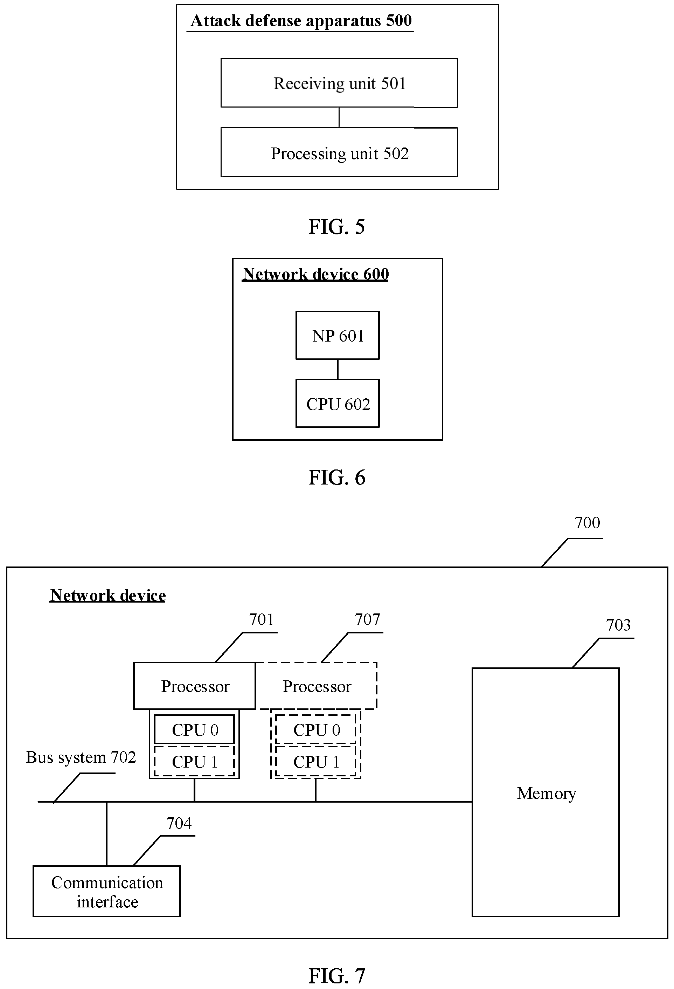

Correspondingly, an embodiment of this application further provides an attack defense apparatus 500. The apparatus 500 is applied to a network device, as shown in FIG. 5. The apparatus 500 may include a receiving unit 501 and a processing unit 502.

The receiving unit 501 is configured to receive a first control packet, where the first control packet includes a first sequence number. The receiving unit 501 may perform S101 shown in FIG. 3.

The processing unit 502 is configured to determine, based on a first flow identifier and a status of the first control packet, that the first control packet is a potentially legitimate packet. The processing unit 502 may perform S102 shown in FIG. 3.

The processing unit 502 is further configured to determine, based on the first flow identifier and the first sequence number, that the potentially legitimate packet is a legitimate packet. The processing unit 502 may further perform S103 shown in FIG. 3.

In some implementations, the processing unit 502 is specifically configured to: obtain the first flow identifier of the first control packet and the status of the first control packet, where the first flow identifier indicates a first flow to which the first control packet belongs; and if the first flow identifier does not exist in a first flow table and the status of the first control packet is a preset state, determine that the first control packet is a potentially legitimate packet, where the first flow table is used to record a flow identifier of a received control packet in the preset state, and the preset state is a state corresponding to a TCP handshake packet received by the network device.

The processing unit 502 is specifically configured to: if the first flow identifier exists in the first flow table, and a correspondence between the first flow identifier and a second sequence number exists in a second flow table, and the status of the first control packet is not the preset state, verify the first sequence number based on the second sequence number, and in response to successful verification, determine that the first control packet is a legitimate packet.

In some implementations, the processing unit 502 is specifically configured to: determine a sequence number range based on the second sequence number and a preset threshold; and determine whether the first sequence number falls within the sequence number range, and if yes, determine that the verification succeeds, or if no, determine that the verification fails.

In some implementations, the processing unit 502 is specifically configured to: calculate a difference between the second sequence number and the first sequence number; and determine whether the difference is less than or equal to a preset length range, and if yes, determine that the verification succeeds, or if no, determine that the verification fails.

In some implementations, the processing unit 502 is further configured to update the second flow table based on the first sequence number, where the updated second flow table includes a correspondence between the first flow identifier and the first sequence number.

In some implementations, the receiving unit 501 is further configured to receive a second control packet, where the second control packet belongs to the first flow; and the processing unit 502 is further configured to: if the first flow identifier exists in the first flow table and a status of the second control packet is the preset state, determine that the second control packet is not a legitimate packet, and discard the second control packet.

In some implementations, the receiving unit 501 is further configured to receive a third control packet; and the processing unit 502 is further configured to: obtain a second flow identifier of the third control packet, where the second flow identifier indicates a second flow to which the third control packet belongs; and if the second flow identifier does not exist in the first flow table and a status of the third control packet is the preset state, record the second flow identifier in the first flow table.

In some implementations, the receiving unit 501 is further configured to receive a fourth control packet, where the fourth control packet belongs to the second flow, and the fourth control packet includes a third sequence number; and the processing unit 502 is further configured to: if it is determined that a TCP connection related to the second flow is successfully established, record a correspondence between the second flow identifier and the third sequence number in the second flow table.

In some implementations, the first flow table may be a hash table or a Bloom filter table, and the second flow table may be a hash table.

In some implementations, the TCP handshake packet includes a SYN packet, a SYN-ACK packet, or an ACK packet.

In some implementations, an NP of the apparatus 500 sends the first control packet to a CPU of the apparatus 500; and the CPU of the apparatus 500 processes the first control packet.

It should be noted that, for a specific implementation and an achieved technical effect of the apparatus 500 provided in this embodiment of this application, refer to related descriptions of implementation steps of the network device in the method 100 shown in FIG. 3.

With reference to FIG. 6, an embodiment of this application further provides a network device 600. The network device 600 may include an NP 601 and a CPU 602. The NP 601 is configured to perform the method 100 provided in any possible implementation of the method 100 shown in FIG. 3.

Optionally, the NP 601 is further configured to send a first control packet that is determined to be legitimate to the CPU 602, and the CPU 602 is configured to process the first control packet.

With reference to FIG. 7, an embodiment of this application further provides a network device 700. The network device 700 may be the network device in any one of the foregoing embodiments, for example, may be the network device 10 or the network device 20 in FIG. 1; or for another example, may be the network device in FIG. 3. The network device 700 may implement functions of various network devices in the foregoing embodiments. The network device 700 includes at least one processor 701, a bus system 702, a memory 703, and at least one communication interface 704.

The network device 700 is an apparatus with a hardware structure, and may be configured to implement a functional module in the attack defense apparatus 500 shown in FIG. 5. For example, a person skilled in the art may conceive that the processing unit 502 in the attack defense apparatus 500 shown in FIG. 5 may be implemented by invoking code in the memory 703 by the at least one processor 701. Alternatively, the network device 700 is an apparatus with a hardware structure, and may be configured to implement a functional module of the NP 601 in the network device 600 shown in FIG. 6.

Optionally, the network device 700 may be further configured to implement a function of the network device in any one of the foregoing embodiments.

Optionally, the processor 701 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of solutions of this application.

The bus system 702 may include a path for transmitting information between the foregoing components.

The communication interface 704 is configured to communicate with another device or a communication network.

The memory 703 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory may exist independently, and is connected to the processor through the bus. Alternatively, the memory may be integrated with the processor.

The memory 703 is configured to store application program code for executing the solutions in this application, and the processor 701 controls execution. The processor 701 is configured to execute the application program code stored in the memory 703, to implement the function of the method in this application.

During specific implementation, in an embodiment, the processor 701 may include one or more CPUs, for example, a CPU 0 and a CPU 1 in FIG. 7.

In specific implementation, in an embodiment, the network device 700 may include a plurality of processors, for example, the processor 701 and a processor 707 in FIG. 7. Each of the processors may be a single-core (single-CPU) processor, or may be a multi-core (multi-CPU) processor. The processor herein may be one or more devices, circuits, and/or processing cores configured to process data (for example, computer program instructions).

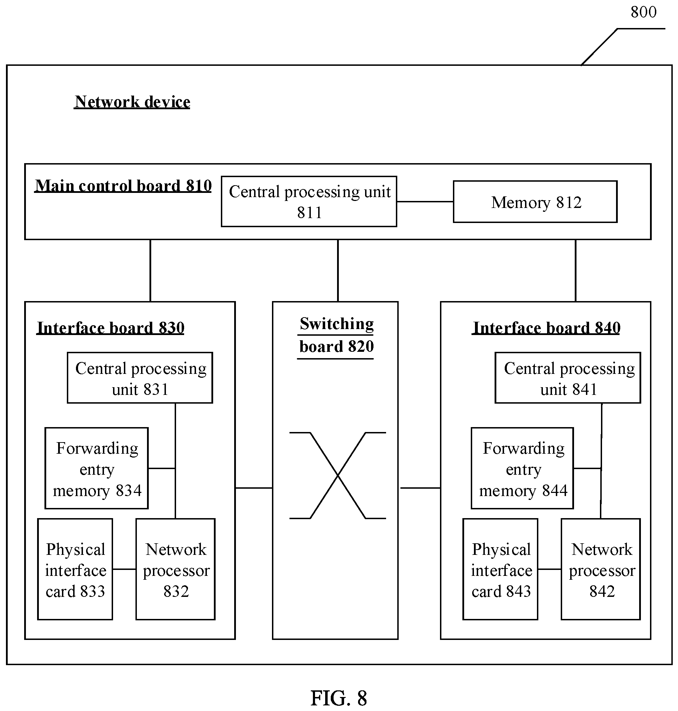

FIG. 8 is a diagram of a structure of another network device 800 according to an embodiment of this application. The network device 800 may be the network device in any one of the foregoing embodiments, for example, may be the network device 10 or the network device 20 in FIG. 1; or for another example, may be the network device in FIG. 3. The network device 800 may implement functions of various network devices in the foregoing embodiments.

The network device 800 includes a main control board 810 and an interface board 830.

The main control board 810 is also referred to as a main processing unit (main processing unit, MPU) or a route processor card (route processor card). The main control board 810 controls and manages components in the network device 800, including route calculation, device management, device maintenance, and protocol processing. The main control board 810 includes a central processing unit 811 and a memory 812.

The interface board 830 is also referred to as a line processing unit (line processing unit, LPU), a line card (line card), or a service board. The interface board 830 is configured to provide various service interfaces, and forward a data packet. The service interface includes but is not limited to an Ethernet interface, a POS (Packet over SONET/SDH) interface, or the like. The Ethernet interface is, for example, a flexible Ethernet service interface (Flexible Ethernet Client, FlexE Client). The interface board 830 includes a central processing unit 831, a network processor 832, a forwarding entry memory 834, and a physical interface card (physical interface card, PIC) 833.

The central processing unit 831 on the interface board 830 is configured to control and manage the interface board 830, and communicate with the central processing unit 811 on the main control board 810.

The network processor 832 is configured to implement packet forwarding processing. A form of the network processor 832 may be a forwarding chip. Specifically, uplink packet processing includes processing at a packet ingress interface, and forwarding table lookup, and downlink packet processing includes forwarding table lookup, and the like.

The physical interface card 833 is configured to implement a physical layer interconnection function. Original traffic enters the interface board 830 from the physical interface card 833, and a processed packet is sent out from the physical interface card 833. The physical interface card 833 includes at least one physical interface. The physical interface is also referred to as a physical port. The physical interface card 833 corresponds to a FlexE physical interface in a system architecture. The physical interface card 833, also referred to as a subcard, may be installed on the interface board 830, and is responsible for converting an optical/electrical signal into a packet, performing validity check on the packet, and forwarding the packet to the network processor 832 for processing. In some embodiments, the central processing unit 831 on the interface board 830 may also perform a function of the network processor 832, for example, implement software forwarding based on a general-purpose CPU, so that the network processor 832 is not needed in the physical interface card 833.

Optionally, the network device 800 includes a plurality of interface boards. For example, the network device 800 further includes an interface board 840, and the interface board 840 includes a central processing unit 841, a network processor 842, a forwarding entry memory 844, and a physical interface card 843.

Optionally, the network device 800 further includes a switching board 820. The switching board 820 may also be referred to as a switch fabric unit (switch fabric unit, SFU). When the network device has a plurality of interface boards 830, the switching board 820 is configured to complete data switching between the interface boards. For example, the interface board 830 and the interface board 840 may communicate with each other via the switching board 820.

The main control board 810 is coupled to the interface board 830. For example, the main control board 810, the interface board 830, the interface board 840, and the switching board 820 are connected to a system backplane by using a system bus to implement interworking. In a possible implementation, an inter-process communication (inter-process communication, IPC) protocol channel is established between the main control board 810 and the interface board 830, and the main control board 810 communicates with the interface board 830 through the IPC channel.

Logically, the network device 800 includes a control plane and a forwarding plane. The control plane includes the main control board 810 and the central processing unit 831. The forwarding plane includes components that perform forwarding, such as the forwarding entry memory 834, the physical interface card 833, and the network processor 832. The control plane performs functions such as routing, generating a forwarding table, processing signaling and a protocol packet, and configuring and maintaining a device status. The control plane delivers the generated forwarding table to the forwarding plane. At the forwarding plane, by performing table lookup based on the forwarding table delivered by the control plane, the network processor 832 forwards a packet received by the physical interface card 833. The forwarding table delivered by the control plane may be stored in the forwarding entry memory 834. In some embodiments, the control plane and the forwarding plane may be completely separated, and are not on a same device.

If the network device 800 is configured as the network device shown in FIG. 3, the network processor 832 may trigger the physical interface card 833 to receive a first control packet, where the first control packet includes a first sequence number; and the central processing unit 811 may determine, based on a first flow identifier and a status of the first control packet, that the first control packet is a potentially legitimate packet, and then determine, based on the first flow identifier and the first sequence number, that the potentially legitimate packet is a legitimate packet.

It should be understood that the receiving unit 501 in the attack defense apparatus 500 and the communication interface 704 in the network device 700 may be equivalent to the physical interface card 833 or the physical interface card 843 in the network device 800; and the processing unit 502 in the attack defense apparatus 500 and the processor 701 in the network device 700 may be equivalent to the central processing unit 811 or the central processing unit 831 in the network device 800.

It should be understood that, in this embodiment of this application, an operation on the interface board 840 is consistent with an operation on the interface board 830. For brevity, details are not described again. The network device 800 in this embodiment may correspond to the attack defense apparatus 500 or the network device 700 in the foregoing embodiments. The main control board 810, the interface board 830, and/or the interface board 840 in the network device 800 may implement functions and/or various steps implemented in the attack defense apparatus 500 or the network device 700 in the foregoing embodiments. For brevity, details are not described herein again.

It should be understood that, there may be one or more main control boards. When there are a plurality of main control boards, the main control boards may include an active main control board and a standby main control board. There may be one or more interface boards. A network device with a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need a switching board, and the interface board provides a function of processing service data of an entire system. In a distributed forwarding architecture, the network device may have at least one switching board, and data switching between a plurality of interface boards is implemented by using the switching board, to provide a large-capacity data switching and processing capability. Therefore, a data access and processing capability of the network device in the distributed architecture is higher than that of the device in the centralized architecture. Optionally, the network device may alternatively be in a form in which there is only one card. To be specific, there is no switching board, and functions of the interface board and the main control board are integrated on the card. In this case, the central processing unit on the interface board and the central processing unit on the main control board may be combined to form one central processing unit on the card, to perform functions obtained after the two central processing units are combined. The device in this form (for example, a network device like a low-end switch or router) has a low data switching and processing capability. A specific architecture that is to be used depends on a specific networking deployment scenario.

In some possible embodiments, the foregoing network devices may be implemented as virtualized devices. For example, the virtualized device may be a virtual machine (English: Virtual Machine, VM) on which a program having a packet sending function is run, and the virtual machine is deployed on a hardware device (for example, a physical server). The virtual machine is a complete software-simulated computer system that has complete hardware system functions and that runs in an entirely isolated environment. The virtual machine may be configured as each network device in embodiments of this application. For example, each network device may be implemented based on a general-purpose physical server with reference to a network functions virtualization (Network Functions Virtualization, NFV) technology. The network devices are virtual hosts, virtual routers, or virtual switches. After reading this application, with reference to the NFV technology, a person skilled in the art may virtualize, on the general-purpose physical server, the network devices having the foregoing functions. Details are not described herein again.

It should be understood that the network devices in the foregoing product forms respectively have any functions of the network devices or communication devices in the foregoing method embodiments, and details are not described herein again.

An embodiment of this application further provides a chip, including a processor and an interface circuit. The interface circuit is configured to receive instructions and transmit the instructions to the processor. The processor may be, for example, a specific implementation form of the packet processing apparatus in embodiments of this application, and may be configured to perform the foregoing route selection method. The processor is coupled to a memory. The memory is configured to store a program or instructions. When the program or the instructions are executed by the processor, the chip system is caused to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

In addition, an embodiment of this application further provides a readable storage medium. The readable storage medium stores program code or instructions. When the program code or the instructions are run on a processor, the processor is caused to perform the method in any implementation of the embodiment shown in FIG. 3.

In addition, an embodiment of this application further provides a program product. When the program product is run on a processor, the processor is caused to perform the method in any implementation of the foregoing method 100.

It should be understood that "determining B based on A" mentioned in embodiments of this application does not mean that B is determined based only on A. Alternatively, B may be determined based on A and/or other information.

"First" in names such as "first control packet" and "first flow identifier" mentioned in this application is merely used as a name identifier, and does not represent "first" in a sequence. Such a rule is also applicable to "second" and the like.

From the foregoing descriptions of the implementations, a person skilled in the art may clearly understand that some or all steps of the methods in embodiments may be implemented by software in addition to a universal hardware platform. Based on such an understanding, the technical solutions of this application may be implemented in a form of a software product. The computer software product may be stored in a storage medium, for example, a read-only memory (English: read-only memory, ROM)/RAM, a magnetic disk, or a compact disc, and includes several instructions for instructing a computer device (which may be a personal computer, a server, or a network communication device like a router) to perform the methods described in embodiments or some parts of embodiments of this application.

Embodiments in this specification are all described in a progressive manner. For same or similar parts in embodiments, refer to these embodiments. Each embodiment focuses on a difference from other embodiments. Especially, system embodiments and device embodiments are basically similar to method embodiments, and therefore are described briefly. For related parts, refer to partial descriptions in the method embodiments. The described device and system embodiments are merely examples. The modules described as separate parts may or may not be physically separate, and parts displayed as modules may or may not be physical modules, may be located in one position, or may be distributed on a plurality of network units. Some or all the modules may be selected based on an actual requirement to achieve the objectives of the solutions of embodiments. A person of ordinary skill in the art may understand and implement the embodiments without creative efforts.

The foregoing merely describes example implementations of this application, and is not intended to limit the protection scope of this application. It should be noted that a person of ordinary skill in the art may make improvements and refinements without departing from this application and such improvements and polishing shall fall within the protection scope of this application.

## Claims

1. An attack defense method, applied to a network device and comprising:
receiving a first control packet, wherein the first control packet comprises a first sequence number;
determining, based on a first flow identifier and a status of the first control packet, that the first control packet is a potentially legitimate packet; and
determining, based on the first flow identifier and the first sequence number, that the potentially legitimate packet is a legitimate packet.

2. The method according to claim 1, wherein
the determining, based on the first flow identifier and the status of the first control packet, that the first control packet is a potentially legitimate packet comprises:
obtaining the first flow identifier of the first control packet and the status of the first control packet, wherein the first flow identifier indicates a first flow to which the first control packet belongs; and
if the first flow identifier does not exist in a first flow table and the status of the first control packet is a preset state, determining that the first control packet is a potentially legitimate packet, wherein the first flow table is used to record a flow identifier of a received control packet in the preset state, and the preset state is a state corresponding to a transmission control protocol TCP handshake packet received by the network device; and
the determining, based on the first flow identifier and the first sequence number, that the potentially legitimate packet is a legitimate packet comprises:
if the first flow identifier exists in the first flow table, and a correspondence between the first flow identifier and a second sequence number exists in a second flow table, and the status of the first control packet is not the preset state, verifying the first sequence number based on the second sequence number, and in response to successful verification, determining that the first control packet is a legitimate packet.

3. The method according to claim 2, wherein the verifying the first sequence number based on the second sequence number comprises:
determining a sequence number range based on the second sequence number and a preset threshold; and
determining whether the first sequence number falls within the sequence number range, and if yes, determining that the verification succeeds, or if no, determining that the verification fails.

4. The method according to claim 2, wherein the verifying the first sequence number based on the second sequence number comprises:
calculating a difference between the second sequence number and the first sequence number; and
determining whether the difference is less than or equal to a preset length range, and if yes, determining that the verification succeeds, or if no, determining that the verification fails.

5. The method according to any one of claims 2 to 4, wherein the method further comprises:
updating the second flow table based on the first sequence number, wherein the updated second flow table comprises a correspondence between the first flow identifier and the first sequence number.

6. The method according to any one of claims 2 to 5, wherein the method further comprises:
receiving a second control packet, wherein the second control packet belongs to the first flow; and
if the first flow identifier exists in the first flow table and a status of the second control packet is the preset state, determining that the second control packet is not a legitimate packet, and discarding the second control packet.

7. The method according to any one of claims 2 to 6, wherein the method further comprises:
receiving a third control packet;
obtaining a second flow identifier of the third control packet, wherein the second flow identifier indicates a second flow to which the third control packet belongs; and
if the second flow identifier does not exist in the first flow table and a status of the third control packet is the preset state, recording the second flow identifier in the first flow table.

8. The method according to claim 7, wherein the method further comprises:
receiving a fourth control packet, wherein the fourth control packet belongs to the second flow, and the fourth control packet comprises a third sequence number; and
if it is determined that a TCP connection related to the second flow is successfully established, recording a correspondence between the second flow identifier and the third sequence number in the second flow table.

9. The method according to any one of claims 2 to 8, wherein the first flow table is a hash table or a Bloom filter table, and the second flow table is a hash table.

10. The method according to any one of claims 2 to 9, wherein the TCP handshake packet comprises a synchronization SYN packet, a synchronization-acknowledgment SYN-ACK packet, or an acknowledgment ACK packet.

11. The method according to any one of claims 1 to 10, wherein the method further comprises:
sending, by a network processor NP of the network device, the first control packet to a central processing unit CPU of the network device; and
processing, by the CPU of the network device, the first control packet.

12. A network processor NP, comprising:
a processing unit, configured to perform operations other than the receiving operation and the sending operation in the method according to any one of claims 1 to 11; and
a transceiver unit, configured to perform the receiving operation and the sending operation in the method according to any one of claims 1 to 11.

13. A network device, comprising:
a processing unit, configured to perform operations other than the receiving operation and the sending operation in the method according to any one of claims 1 to 11; and
a transceiver unit, configured to perform the receiving operation and the sending operation in the method according to any one of claims 1 to 11.

14. A network device, wherein the network device comprises a memory and a processor, wherein
the memory is configured to store instructions; and
the processor is configured to execute the instructions in the memory, to perform the method according to any one of claims 1 to 11.

15. A storage medium, wherein the storage medium comprises instructions, and when the instructions are run on a processor, the processor is caused to perform the method according to any one of claims 1 to 11.

16. A program product, wherein the program product comprises a program, and when the program is run on a processor, the method according to any one of claims 1 to 11 is performed.
